# EUROPEAN PATENT SPECIFICATION

(11) **EP 3 759 626 B1**
(45) Date of publication and mention of the grant of the patent: **11.11.2026**
(21) Application number: 18931881.9
(22) Date of filing: 30.08.2018
(51) Int. Cl.: G06F 21/16, G06N 3/09, G06Q 10/101, G06F 21/10

(54) **SHARED CONTENT SIMILARITY ANALYSES**
ÄHNLICHKEITSANALYSEN VON GEMEINSAM GENUTZTEM INHALT
ANALYSES DE SIMILARITÉS DE CONTENUS PARTAGÉS

(43) Date of publication of application: 06.01.2021
(73) Proprietor: Hewlett-Packard Development Company, L.P., Spring TX 77389 (US)
(72) Inventor: CLARK, Alexander Wayne, Houston, Texas 77070 (US)
(74) Representative: Plasseraud IP
(86) International application number: PCT/US2018/048700
(87) International publication number: WO 2020/046306

(56) References cited:
- US-A1- 2007 028 303
- US-A1- 2009 249 482
- US-A1- 2010 212 010
- US-A1- 2011 131 144
- US-A1- 2013 042 294

## Description

### BACKGROUND

Organizations are becoming increasingly more dynamic with groups of individuals assigned to different projects and/or tasks. An organization may have tens, or in some cases hundreds, of such groups that collaborate together with a common objective in mind. Often times these users meet together and share electronic content such as slide presentations, videos, etc. relating to the subject matter of the group to which they are assigned.
US2007/028303 A1 discloses a security system providing a defense from unknown viruses by implementing policies that allow an administrator to approve, block, quarantine or log file activities.

### BRIEF DESCRIPTION OF THE DRAWINGS

The present invention is defined in the appended independent claims. Further preferred embodiments are defined in the dependent claims.

The accompanying drawings illustrate various examples of the principles described herein and are part of the specification. The illustrated examples are given merely for illustration, and do not limit the scope of the claims.
Fig. 1 is a block diagram of a system for shared content similarity analysis, according to an example of the principles described herein.
Fig. 2 is a flow chart of a method for shared content similarity analysis, according to an example of the principles described herein.
Fig. 3 is a diagram of an environment for shared content similarity analysis, according to an example of the principles described herein.
Fig. 4 is a diagram of an environment for shared content similarity analysis, according to another example of the principles described herein.
Fig. 5 is a diagram of an environment for shared content similarity analysis, according to another example of the principles described herein.
Fig. 6 is a flow chart of a method for shared content similarity analysis, according to another example of the principles described herein.
Fig. 7 is a diagram of a machine-readable storage medium for shared content similarity analysis, according to an example of the principles described herein.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Organizations are becoming increasingly more dynamic with groups of individuals assigned to different projects and/or tasks. An organization may have tens, or in some cases hundreds, of such groups that collaborate together with a common objective in mind. Often times these users meet together and share electronic content such as slide presentations, videos, etc. relating to the subject matter of the group to which they are assigned.

While the intent of these groups may be admirable, sometimes the operations of the various groups can lead to inefficiencies. For example, it can be difficult to find the right subject matter experts or stay aligned with all the conversations taking place within a large organization. Moreover, it may be the case that efforts of a group may be duplicative, redundant, and/or impeded by the efforts of other groups. For example, two different groups may have a workload that overlaps with one another. Accordingly, the developments of one group may overlap with the developments of another group such that the groups are redundantly addressing the same issue, or redundantly developing a product.

In another example, two groups may be developing different components of a larger system. The developments by one group may cause development/compatibility issues with the developments by the other group. These complications and others find their root in the fact that the operation, and sharing of content, within these groups may be isolated with little connection and/or collaboration between various groups. In other examples, the groups that are working on a similar topic may not even be aware of the existence of another group with a similar objective.

Accordingly, the present specification describes a system and method for identifying groups that could benefit from inter-group collaboration. Specifically, the present specification describes a system that analyzes content such as multimedia shared in a collaborative meeting. Such analysis is done for different collaborative meetings within an organization. The content for different meetings is compared, and similarities and discrepancies are identified between the shared content. If the shared content is sufficiently similar, a recommendation is provided to members of the different groups. For example, if it is determined that two groups within an organizations have identified a particular issue and have called a meeting where content will be shared related to the issue, the system analyzes the shared content, determines that each group is addressing the same issue, and provides a recommendation such as indicating to the groups that the other group is working on the same issue, and encouraging the groups to collaborate together to more efficiently address the issue and reduce an effort redundancy in addressing the issue.

Specifically, the present specification describes a content tracking system. The system includes a network interface to couple the content tracking system to multiple computing devices. A content interceptor of the system intercepts content shared during a collaborative meeting and a content analyzer 3nalyses the shared content to determine a topic of the shared content. A content comparer identifies similarities between shared content of different collaborative meetings. An interface of the content tracking system provides a recommendation to at least one user participating in at least one of the different collaborative meetings based on an output of the content comparer.

The present specification also describes a method. According to the method, content shared during a collaborative meeting is intercepted and analyzed to determine a topic for the shared content. Similarities between shared content of different collaborative meetings are identified. A recommendation is then provided to at least one user participating in at least one of the different collaborative meetings based on identified similarities between the shared content of the at least one different collaborative meeting and the shared content of the collaborative meeting.

The present specification also describes a tangible machine- readable storage medium encoded with instructions executable by a processor. The machine-readable storage medium includes instructions to intercept, at a computing device, content shared via another computing device during a collaborative meeting and analyze the shared content. The machine-readable storage medium also includes instructions to determine differences between the shared content of the collaborative meeting and shared content of other collaborative meetings, to determine similarities between the shared content of the collaborative meeting and shared content of other collaborative meetings, and to determine that the collaborative meeting relates to a same topic as at least one of the other collaborative meetings based on a threshold degree of similarity between respective shared content. The machine-readable storage medium also includes instructions to provide participants in at least one of the collaborative meeting and the at least one other collaborative meeting with a recommendation based on a determined similarity.

In summary, using such a content tracking system 1 ) allows for effective identification of related collaborative groups; 2) facilitates coordinated efforts of related collaborative groups; 3) more effectively manages the efforts of multiple collaborative groups; and 4) promotes more effective collaboration and the attendant business ideals such collaboration espouses.

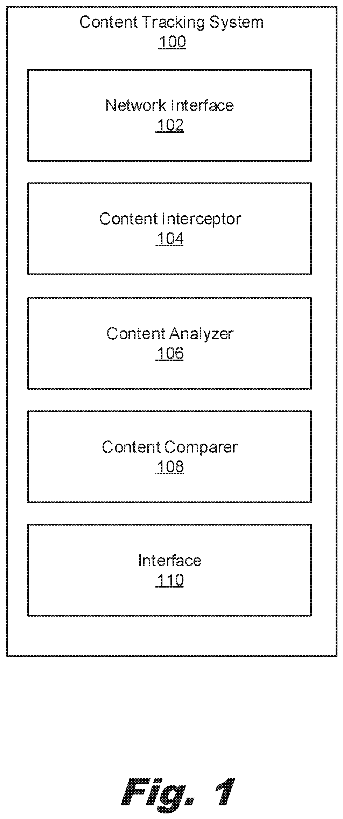

Turning now to the figures, Fig. 1 is a block diagram of a system (100) for shared content similarity analysis, according to an example of the principles described herein. The content tracking system (100) includes a network interface (102) to couple the content tracking system (100) to multiple computing devices. That is, the content tracking system (100) has the ability to intercept shared content from a number of different computing devices. To intercept such content, the computing devices from which content is shared are coupled to the content tracking system (100) via a network interface (102).

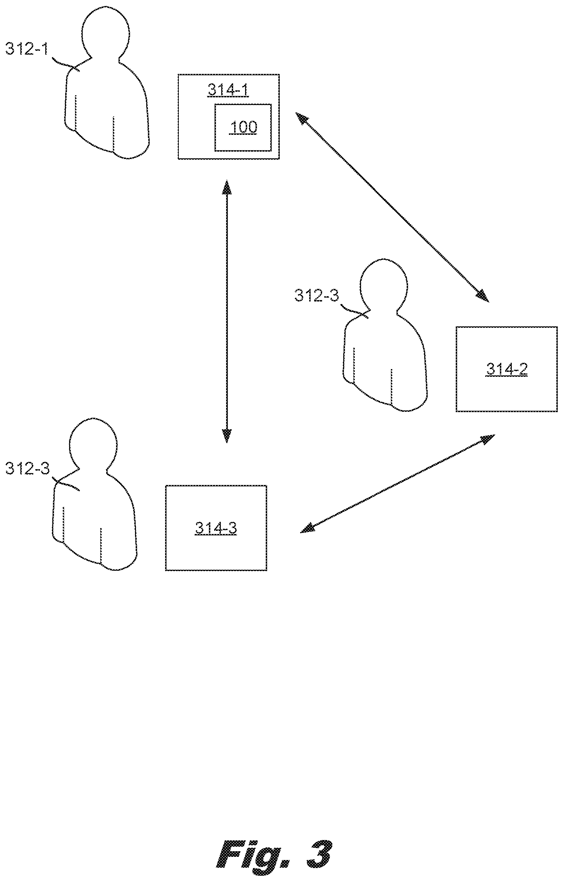

The network interface (102) may be of a variety of types including a physical wired connection or a wireless connection. As will be described in connection with Figs. 3-5, the environment in which the content tracking system (100) is implemented may vary, with a constant being that a large network of computing devices are used within an organization and are used to share content with other computing devices of users within a collaborative group. As content is shared among these computing devices, they share a connection across a network. The content tracking system (100) also has a network interface (102) to be coupled to, and facilitate content interception from these various computing devices.

The content tracking system (100) also includes a content interceptor (104) to intercept content that is shared during a collaborative meeting. That is, during collaborative meetings of group of individuals, content is shared. As a specific example, a particular individual in a group may share a slide presentation. In so doing, the individual either shares the content on their own computing device or through a conferencing computing device. In either example, the content interceptor (104) collects this shared content.

The shared content may be of a variety of types. For example, the content interceptor (104) may intercept a video presentation, an audio presentation, a textual presentation, and/or a multimedia presentation. In other examples, the content interceptor (104) may intercept captured content from the collaborative meeting. For example, the content interceptor (104) may capture a video and/or audio recording of the collaborative meeting. While particular reference is made to specific content that is shared and captured, different forms, or types of content may be shared and intercepted. In examples where multiple types, or formats, of content is shared in a collaborative meeting, the content interceptor (104) captures the multiple formats. That is, a user may share a multimedia presentation as well as a video presentation. Moreover, the collaborative meeting may be video-recorded. In this example, the content interceptor (104) intercepts the multimedia presentation, the video presentation, and the video capture of the collaborative meeting.

The content that is intercepted is streamed during the collaborative meeting. That is, the content that is analyzed is not necessarily the content that is intended to be presented during a meeting, but the actual content that is presented. Analyzing the content that is actually presented, and not just that which is intended to be presented, increases the determination of content similarity. That is, by analyzing that material which is actually presented, or shared, a determination regarding similarity is based on what a particular group deems as most relevant, for example based on what is actually shared, and how much time is dedicated to that content.

Content intercept is facilitated by the network connection of the various multiple devices. That is, because computing devices are connected via a network and because the content tracking system (100) has a network interface (102) coupling the content tracking system (100) to this network of computing devices, the content interceptor (104) has access to this content that is shared during a collaborative meeting.

A content analyzer (106) of the content tracking system (100) analyzes the shared content to determine a topic for the shared content. The content analyzer (106) may include any sort of recognition component. That is, the content analyzer (106) may include an image recognizer to determine a topic relating to a particular image. Other examples of components of the content analyzer (106) include a textual recognition component and a voice recognition component. These components can analyze a particular format of content and determine from that analysis what is being shared. For example, presume an engineer presents a multimedia presentation relating to an automobile component, which presentation includes images and videos of the automobile component. An image and/or video recognition component of the content analyzer (106) may analyze characteristics of this photo to determine that the image is related to the automobile component. Such information may be used in classifying the collaborative meeting and be used to determine which other collaborative meetings are also associated with, or relate to, the automobile component.

One particular example of an image/video recognition component is provided as follows. In this example, the content analyzer (106) may access a database with a corpus of images/videos. The corpus may include a set of "positive" images that depict an image of a particular subject. The corpus may also include a set of"negative" images that do not depict the image of the particular subject. The image/video recognition component can use characteristic collected from this corpus and compare characteristics of a particular image of a collaborative meeting presentation to determine whether images in the collaborative meeting presentation are of the particular subject.

The content analyzer (106) is a neural network to determine based on a corpus of the data, a subject matter of the shared content. For example, returning to the above example, presuming a particular presentation has image(s) of an automobile component. The content analyzer (106) may analyze a corpus of images which include images that have been identified as depicting the automobile component and images that have been definitively identified as not depicting the automobile component. By analyzing characteristics of the collaborative meeting image(s) and the database, the content analyzer (106) may determine that there is enough similarity between the positive images and the images of the collaborative meeting presentation to determine that the collaborative meeting presentation relates to the topic of the automobile component.

Similar analyses with other formats of content may also be performed by the content analyzer (106). Combining the results of the analysis of various types of content in a collaborative meeting, a topic of the current collaborative meeting may be ascertained.

In addition to this trained type of machine learning, the neural network could be unsupervised. An unsupervised neural network trains itself to learn new images over time by finding similarities in image features. For instance, if a company was working on development of a new product, the neural net system would eventually recognize it over time, even if it had not specifically been supplied positive images of that product. That is, the neural network would simply lay, or cascade, layers of image feature information that collectively marks similarities between different types of images.

The content tracking system (100) also includes a content comparer (108) to identify similarities between shared content of different collaborative meetings. That is, content analysis is performed for various collaborative meetings, and the results of such analysis is compared to one another. Put another way, the results of content analysis of a first collaborative meeting may result in machine-readable instructions. These results can be compared with the analysis output for another collaborative meeting. The comparison may indicate similarities between the various meetings and a corresponding notification/recommendation may be generated.

In some examples, the content comparer (108) compares content across format types. That is, the content comparer (108) may compare the analysis results for a video presentation against analysis results of a multimedia presentation, or even the video capture of a collaborative meeting. The content comparer (108) may do so as the analysis results are converted to a consistent format, such as a machine-readable format.

An example of content comparison is now provided. In this example, a first group may include elementary school teachers that have identified, and are attempting to address, low math test scores for first grade students and a second group may include elementary school teachers that have identified, and are attempting to address, low math test scores for second grade students. As a lack of collaboration between the groups may lead to either group addressing the issue in different, and possibly conflicting ways, group collaboration may be desired.

In this example, the first group has a meeting where a particular group member inserts a portable memory storage device into a conferencing computing device and shares a multimedia presentation with graphics and text. In this example, the content interceptor (104) intercepts the presentation content and the content analyzer (106) performs graphic and textual analysis and outputs results in a particular format. Similarly, the second group has a meeting where a particular group member records the video of the meeting. In this example, the content interceptor (104) intercepts the video captured and the content analyzer (106) performs video graphic analysis and outputs results in the same format. The content comparer (108) may then analyze the results to determine similarities between the topics of the meetings, i.e., that they relate to low test scores of students. The content comparer (108) may also determine discrepancies between the topics of the meetings, i.e., that they relate to different grade levels.

An interface (110) of the content tracking system (100) then provides a recommendation to at least one user participating in at least one of the different collaborative meetings based on an output of the content comparer (108). Specifically, the interface (1 10) may note to at least one user in the first group and/or at least one user in the second group, that another group exists that is researching a similar topic and that collaboration between the groups may be beneficial and more effective.

The interface (110) may present the notifications and recommendations in any form. For example, a notice may be text and/or audio. The notifications and recommendations may also be to a variety of degrees. For example, the recommendation may simply indicate that someone else is discussing a similar, or the same, topic. In another example, the recommendation may identify the topic that is shared, the discrepancies between the shared content, and the individuals in the other group. For example, the recommendation may state that "a group of second grade teachers is also discussing low test scores at the school, perhaps they may have insight as to how to address this issue." Thus, the present specification describes a system (100) that determines when collaborative groups, who may be unaware of each other, are discussing and presenting content related to the same topic. The content tracking system (100) can then provide a notification to the relevant individuals, thus potentially avoiding duplicated, overlapping, redundant, and/or conflicting work between the groups.

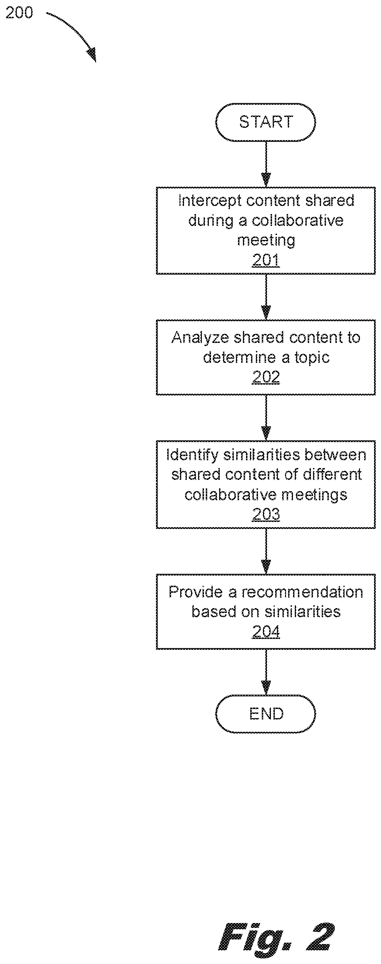

Fig. 2 is a flow chart of a method (200) for shared content similarity analysis, according to an example of the principles described herein. According to the method (200), content shared during a particular collaborative meeting is intercepted (block 201). That is, via a network interface (Fig. 1, 102), content that is shared during a collaborative meeting is accessible by the content tracking system (Fig. 1, 100). As described above, the shared content may be of a variety of types and may come from a variety, and multiple sources. For example, multiple users may present content at different times during the collaborative meeting. In a particular example, the intercepted (block 201) content may be the voices of different group members in a recorded meeting.

The intercepted content is then analyzed (block 202) to determine a topic. That is, the content analyzer (Fig. 1, 104) may include different media analyzers and classifiers to determine what topic/subject the particular media analyzed relates to and to classify the content as such. As described above, such analysis (block 202) may be of a variety of media formats and types. As such, the content analyzer (Fig. 1, 104) may include a variety of analyzers to analyze the different formats and types. Moreover, as described above, the content analyzer (Fig. 1, 104) includes a neural network analyzer or deep learning analyzer to analyze the content from a database of information collected over time.

The content tracking system (Fig. 1, 100) then identifies (block 203) similarities between the shared content of different collaborative meetings. That is, the output of the content analyzer (Fig. 1, 106) is passed to a content comparer (Fig. 1, 108) which compares the analysis results, regardless of the format and type of content that is analyzed, to determine similarity. In one specific example, such a similarity may be found when different collaborative meetings have images, videos, and/or text relating to weather patterns in a particular state. If the shared content from different collaborative meetings has a threshold degree of similarity, the shared content of that different collaborative meeting is identified as being similar to the shared content of the current collaborative meeting.

For example, a first collaborative meeting within an organization may have shared content that relates to technical specifications for an automobile and a second collaborative meeting within the organization may have shared content that relates to technical specifications for a motorcycle. While the two collaborative meetings may have the identified (block 203) similarities of technical specifications, the similarities may not be significant enough, on account of one being for an automobile and the other for being for a motorcycle, to justify classifying these meetings as similar and providing a corresponding recommendation.

However, in another example, a first collaborative meeting may relate to revisions to an exhaust system of a motorcycle and a second collaborative meeting may relate to revisions to an engine of the motorcycle. The presentations of these meetings may have enough similar content, i.e. , cross-references of similar content, that the content tracking system (Fig. 1, 100) identifies the shared content as similar and to provide an appropriate recommendation and/or notification.

With similarity detected, a recommendation is provided (block 204) based on the similarities. For example, users in either collaborative group may be notified that another group of users is addressing the same topic. In some examples, the recommendation is provided (block 204) in real time, that is during at least one of the different collaborative meetings. That is, the operation of the content tracking system (Fig. 1, 100) to intercept, analyze, and compare shared content may occur as a presentation is being made, or as a collaborative meeting is taking place. Doing so provides a real-time, up-to-date indication to users of collaborative opportunities with others. Accordingly, in this example, a user from the other group could be invited to the present collaborative meeting to discuss the topic.

Fig. 3 is a diagram of an environment for shared content similarity analysis, according to an example of the principles described herein. In the example depicted in Fig. 3, a collaborative group includes three users (312-1, 312-2, 312-3). However, a collaborative group may include any number of users (312). As described above, each computing device (314) associated with users (312) of the collaborative group is connected via a network connection such as a wireless network or a wired network.

In this example, the content tracking system (100) is disposed on a computing device (314) of a user (312) participating in the collaborative meeting. That is, in this example a first user (312-1) may bring a portable computing device (314-1) such as a laptop or a tablet into a room where a presentation regarding a particular topic is to be made. The first user (312-1) may, either on the computing device (314-1) itself, or through a projector, display or present the content. As described above, the content may include captures of the collaborative meeting. Accordingly, the computing device (314-1) may include the components to capture such audio or visual signals. The content interceptor (Fig. 1, 104) captures the shared content, and the content analyzer (Fig. 1, 106) analyzes it to determine a topic and/or subject. In the example where the content tracking system (100) is disposed on the first user computing device (314-1), the content interceptor (Fig. 1, 104) captures just that content that is shared on the first computing device (314-1) where the content tracking system (100) is installed.

In this example, the content analyzer (Fig. 1, 106) may be in communication with a database that is either remote or local to the first computing device (314-1), which database includes the content to which the shared content is compared to determine a topic and/or subject of the collaborative meeting.

Then, as described above, a content comparer (Fig. 1, 108) compares the outputs of the analysis of the shared content from the current collaborative meeting with outputs of the analysis of shared content from other collaborative meetings to determine a similarity therebetween. In this example, the content comparer (Fig. 1, 108) may be in communication with a database that is either remote or local to the first computing device (314-1), which database includes the outputs of analyses of shared content of other collaborative meetings. The first computing device (314-1) also includes the interface (Fig. 1, 110) through which an indication of similarity, notifications, and/or recommendations can be presented.

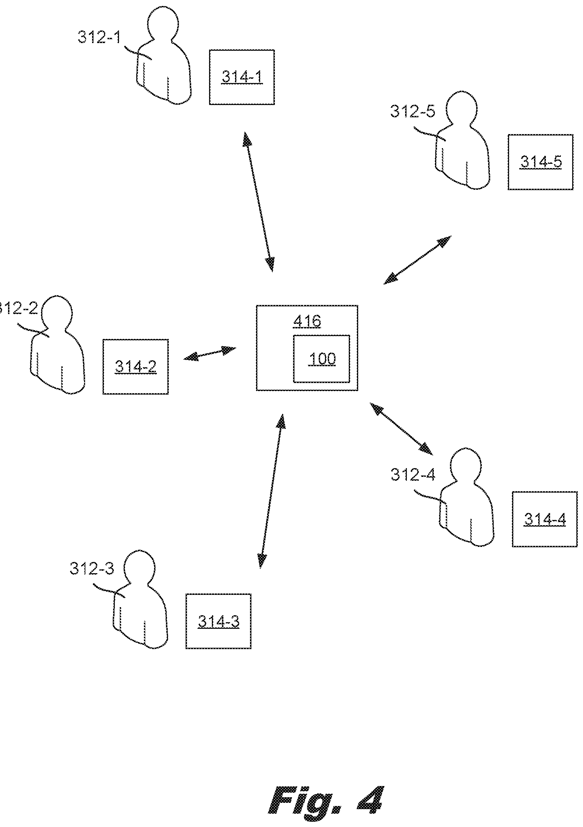

Fig. 4 is a diagram of an environment for shared content similarity analysis, according to an example of the principles described herein. In the example depicted in Fig. 4, a collaborative group includes five users (312-1, 312-2, 312-3, 312-4, 312-5). However, a collaborative group may include any number of users (312). As described above, each computing device (314) associated with users (312) of the collaborative group is connected via a network connection such as a wireless network or a wired network.

In this example, the content tracking system (100) is disposed on a conferencing computing device (416). The shared content may be shared directly from the conferencing computing device (416) or shared indirectly from a user device (314) that is coupled to the conferencing computing device (416). For example, a first user (312-1) may connect a first computing device (314-1) to the conferencing computing device (416). In this example, the first user (312- 1) then presents the content. The content interceptor (Fig. 1, 104) captures the shared content, and the content analyzer (Fig. 1, 106) analyzes it to determine a topic and/or subject. In the example where the content tracking system (100) is disposed on a conferencing computing device (416), the content interceptor (Fig. 1, 104) captures content that is shared on any of the multiple computing devices (314) coupled to the content tracking system (100) during the collaborative meeting. For example, during a collaborative meeting, any one of the computing devices (314-1, 314-2, 314-3, 314-4, 314-5) may be coupled to a display of the conferencing computing device (416) such that the associated user may share content. Accordingly, the content tracking system (100) in this example captures all content shared through the conferencing computing device (416).

In this example, the content analyzer (Fig. 1, 106) may be in communication with a database that is either remote or local to the conferencing computing device (416), which database includes the content to which the shared content is compared to determine a topic and/or subject of the collaborative meeting.

Then, as described above, a content comparer (Fig. 1, 108) compares the outputs of the analysis of the shared content from the current collaborative meeting with outputs of the analysis of shared content from other collaborative meetings to determine a similarity therebetween. In this example, the content comparer (Fig. 1, 108) may be in communication with a database that is either remote or local to the conferencing computing device (416), which database includes the outputs of analyses of shared content of other collaborative meetings, either through the conferencing computing device (416) or other conferencing computing devices (416). The conferencing computing device (416) also includes the interface (Fig. 1, 110) through which an indication of similarity, notifications, and/or recommendations can be presented. In some examples, the notification, indication, and/or recommendation may be passed through the conferencing computing device (416) to any one, or multiple of, the user computing devices (314).

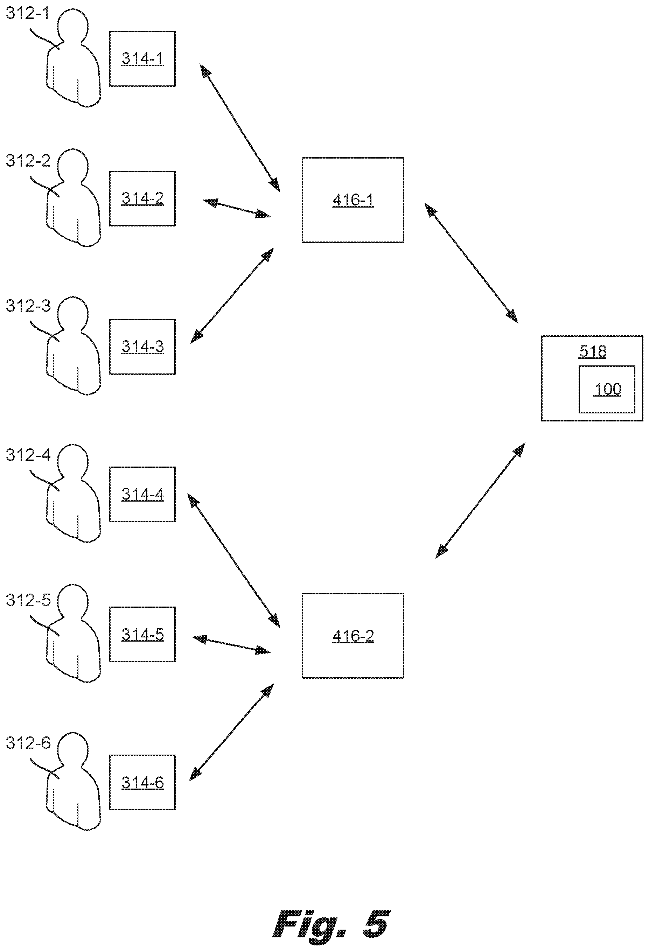

Fig. 5 is a diagram of an environment for shared content similarity analysis, according to an example of the principles described herein. In the example depicted in Fig. 5, two different collaborative groups of three users (312-1, 312-2, 312-3, 312-4, 312-5, 312-6) are depicted. However, a collaborative group may include any number of users (312). As described above, each computing device (314) associated with users (312) of the collaborative group is connected via a network connection such as a wireless network or a wired network.

In this example, the content tracking system (100) is disposed on a server (518) that is coupled to multiple conferencing computing devices (416-1, 416-2). In some examples, the server (518) may be located off-site. In other examples, the server (518) may be on-site, that is within the physical space of the organization. The server (518) may provide additional processing power to analyze and compare the shared content of various collaborative meetings.

In this example, the shared content may be shared directly from the conferencing computing device (416) or shared indirectly from a user device (314) that is coupled to the conferencing computing device (416). For example, a first user (312-1) may connect a first computing device (314-1) to the first conferencing computing device (416-1). In this example, the first user (312-1) then presents the content. The content interceptor (Fig. 1, 104) captures the shared content from the first conferencing computing device (416-1), and the content analyzer (Fig. 1, 106) analyzes it to determine a topic and/or subject. In the example where the content tracking system (100) is disposed on a server (518), the content interceptor (Fig. 1, 104) captures content that is shared on any of the multiple conferencing computing devices (416-1, 416-2) coupled to the content tracking system (100) during the collaborative meeting. Accordingly, the content tracking system (100) in this example captures all content shared through the multiple conferencing computing devices (416-1, 416-2).

In this example, the content analyzer (Fig. 1, 106) may be in communication with a database that is either remote or local to the server (518), which database includes the content to which the shared content is compared to determine a topic and/or subject of the collaborative meeting.

Then, as described above, a content comparer (Fig. 1, 108) compares the outputs of the analysis of the shared content from the current collaborative meeting with outputs of the analysis of shared content from other collaborative meetings to determine a similarity therebetween. In this example, the content comparer (Fig. 1, 108) may be in communication with a database that is either remote or local to the server (518), which database includes the outputs of analyses of shared content of other collaborative meetings, either through conferencing computing devices (416) or other conferencing computing devices. The server (518) also provides the interface (Fig. 1, 1 10) through which an indication of similarity, notifications, and/or recommendations can be presented. In some examples, the notification, indication, and/or recommendation may be passed through the conferencing computing device (416) to any one, or multiple of, the user computing devices (314).

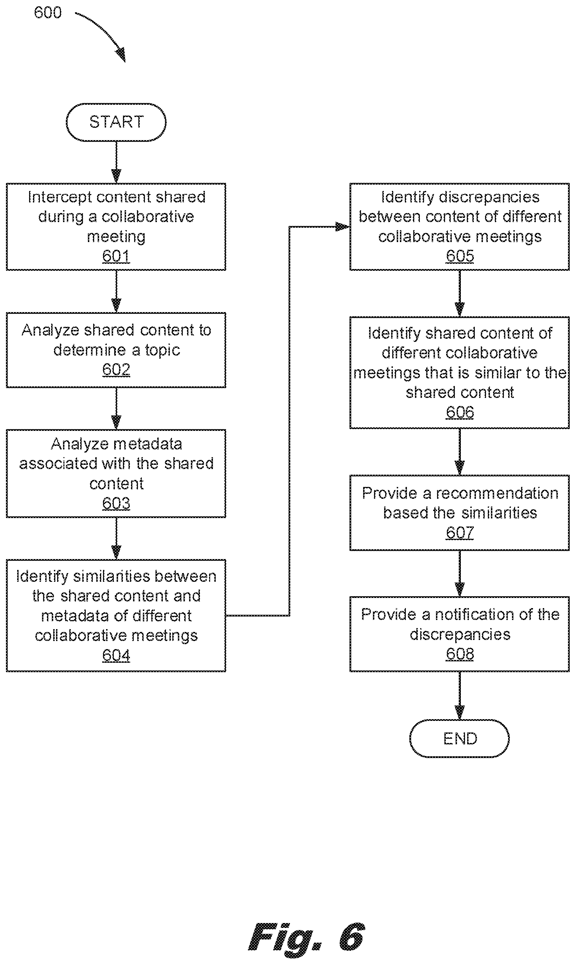

Fig. 6 is a flow chart of a method (600) for shared content similarity analysis, according to an example of the principles described herein. According to the method (600), content shared during a collaborative meeting is intercepted (block 601) and analyzed (block 602) to determine a subject, or topic, of the shared content. In some examples, these operations may be performed as described above in connection with Fig. 2.

In addition to analyzing (block 602) the shared content, the content tracking system (Fig. 1, 100) may analyze (block 603) metadata associated with the shared content. For example, each collaborative meeting may have a calendar event associated with it and the calendar event may have an attendee list. This attendee list may be another indication of similarity between different collaborative meetings. For example, if a particular collaborative meeting is related to the same topic and has at least a portion of similar attendees, it may be further evidence that the collaborative meetings are similar in their content/topic and that collaboration on this front would advance progress. While particular reference is made to analyzing (block 603) attendee-based metadata, other forms of metadata may also be useful and accordingly analyzed (block 603).

Similarities are then identified (block 604) between the shared content and metadata of different collaborative meetings. That is, as described above, the content comparer (Fig. 1, 108) and a metadata comparer can determine how the shared content and metadata associated with different collaborative meetings relate to one another.

In addition to identifying (block 604) similarities, the content tracking system (Fig. 1, 100) identifies (block 605) discrepancies between the content of different collaborative meetings. Such discrepancies may be helpful in determining whether collaborative meetings are similar, and are relevant once meetings have been declared to be similar.

For example, a first collaborative meeting and second collaborative meeting may share certain characteristics such as relating to automobiles. However, the discrepancies may be such that the two are determined to be dissimilar and that collaboration would not necessarily be justified. For example, the first collaborative meeting may relate to an engine component of the automobile and the second collaborative meeting may relate to a paint formulation for the automobile. While both are similar in that they relate to the automobile, the discrepancy of one being related to an engine component and the other to a paint formulation may be significant enough to not classify the different meetings as related to one another.

In another example, the discrepancies may not lead to a separate classification of the meetings, but may be noted and helpful at a later point in time. For example, a first group may be addressing an issue one way while a second group is meeting and addressing the same issue a different way. In this example, it could be noted to the two groups that they are working on the same issue, and then each group may be notified how the other group has addressed the issue, which could enhance the efforts of either, or both, groups.

As yet another example, identified discrepancies (block 605) may lead to the identification of misinformation, such as outdated information. For example, a first group may be discussing a product release and using the version 1 of a product component. A second group may also be discussing the product release but using a version 2 of the same product component. Accordingly, identifying (block 605) the discrepancies may indicate to the first group that they are working on an out-of-date product component.

As described above, when a threshold similarity has been determined between different collaborative meetings, those meetings may be identified (block 606) as being similar. A recommendation is then provided (block 607) based on the similarities. As described above, in addition to providing a recommendation based on similarities, a notification is provided (block 608) indicating the discrepancies between collaborative meetings. In some examples, the recommendation may be provided (block 607) via a different or the same channel than the notification that is provided (block 608). For example, the recommendation may be provided to one user and the notification of a discrepancy may be provided to the same user, or a different user.

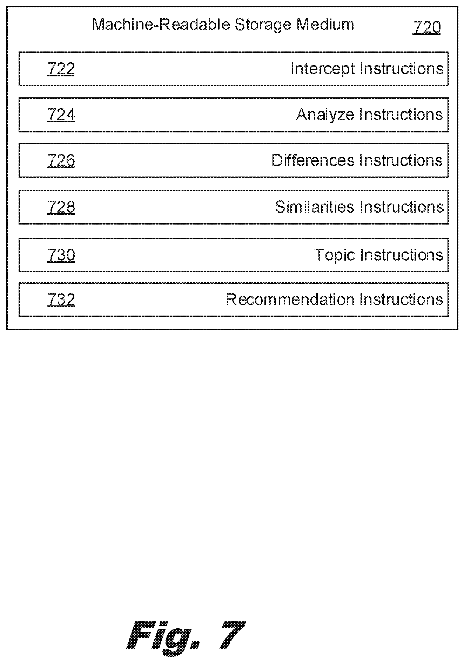

Fig. 7 is a diagram of a machine-readable storage medium (720) for shared content similarity analysis, according to an example of the principles described herein. To achieve its desired functionality, a computing system includes various hardware components. Specifically, the computing system includes a processor. Machine-readable storage medium (720) is communicatively coupled to the processor. The machine-readable storage medium (720) includes a number of instruction sets (722, 724, 726, 728, 730, 732) for performing a designated function. The machine-readable storage medium (720) causes the processor to execute the designated function of the instruction sets (722, 724, 726, 728, 730, 732).

Although the following descriptions refer to a single machine-readable storage medium (720), the descriptions may also apply to multiple machine-readable storage mediums. In such examples, the instruction sets (722, 724, 726, 728, 730, 732) may be distributed (e.g., stored) across multiple machine-readable storage mediums.

The machine-readable storage medium (720) represents any tangible and nontransitory memory capable of storing data such as programmed instructions or data structures used by the computing system.

Referring to Fig. 7, intercept instructions (722), when executed by a processor, cause the computing system to, intercept, at a computing device, content shared via another computing device during a collaborative meeting. Analyze instructions (724), when executed by a processor, causes the computing system to analyze the shared content. Difference instructions (726), when executed by a processor, cause the computing system to determine differences between the shared content of the collaborative meeting and shared content of other collaborative meetings. Similarities instructions (728), when executed by a processor, cause the computing system to determine similarities between the shared content of the collaborative meeting and shared content of other collaborative meetings. Topic instructions

(530), when executed by a processor, cause the computing system to determine that the collaborative meeting relates to a same topic as at least one of the other collaborative meetings based on a threshold degree of similarity between respective shared content. Recommendation instructions (732), when executed by a processor, cause the computing system to provide participants in at least one of the collaborative meeting and the at least one other collaborative meeting with a recommendation based on a determined similarity.

In summary, using such a content tracking system 1) allows for effective identification of related collaborative groups; 2) facilitates coordinated efforts of related collaborative groups; 3) more effectively manage efforts of multiple collaborative groups; and 4) promotes more effective collaboration and the attendant business ideals such collaboration espouses.

## Claims

1. A content tracking system (100), comprising:
a network interface (102) to couple the content tracking system (100) to multiple computing devices (314, 314-n);
a content interceptor (104) to intercept content shared during a collaborative meeting, wherein the shared content is streamed content shared during the collaborative meeting;
a content analyzer (106) to:
analyze shared content to determine a topic of the shared content,
wherein the content analyzer (106) comprises a neural network to determine, based on a corpus of data, the topic of the shared content;
a content comparer (108) to:
identify similarities between shared content of different collaborative meetings;
determine discrepancies between the shared content of the collaborative meeting and shared content of other collaborative meetings; and
determine that the collaborative meeting relates to a same topic as at least one of the other collaborative meetings based on a threshold degree of similarity between respective shared content; and an interface (110) to provide, when the meetings relate to a same topic:
a recommendation to at least one user participating in at least one of the different collaborative meetings (108), and
a notification indicating the discrepancies between collaborative meetings.

2. The system of claim 1, wherein the content interceptor (104) intercepts content of different formats.

3. The system of claim 1, wherein the content comparer (108) compares content across format types.

4. The system of claim 1, wherein:
the content tracking system (100) is disposed on a computing device (314, 314-n) of a user participating in the collaborative meeting; and
the content interceptor (104) intercepts content shared on the computing device (314, 314-n) of the user.

5. The system of claim 1, wherein:
the content tracking system (100) is disposed on a conferencing computing device (416) used during the collaborative meeting; and
the content interceptor (104) intercepts content shared on any of the multiple computing devices (314, 314-n) coupled to the conferencing computing device (416) during the collaborative meeting.

6. The system of claim 1, wherein:
the content tracking system (100) is disposed on a server (518) and is coupled to multiple conferencing computing devices (416); and
the content interceptor (104) intercepts content shared through any of the multiple conferencing computing devices (416) during the different collaborative meetings.

7. A method, comprising:
intercepting content shared during a collaborative meeting, wherein the shared content is streamed content shared during the collaborative meeting;
analyzing shared content to determine a topic of the shared content using a neural network and based on a corpus of data;
identifying similarities between shared content of different collaborative meetings;
identifying discrepancies between the shared content of the collaborative meeting and shared content of other collaborative meetings;
determining that the collaborative meeting relates to a same topic as at least one of the other collaborative meetings based on a threshold degree of similarity between respective shared content; and
when the meetings relate to a same topic:
providing a recommendation to at least one user participating in at least one of the different collaborative meetings based on identified similarities between the shared content of the at least one different collaborative meeting and the shared content of the collaborative meeting, and
providing a notification to at least one user participating in at least one of the different collaborative meetings of the discrepancies.

8. The method of claim 7, wherein the recommendation is provided during at least one of the different collaborative meetings.

9. The method of claim 7
further comprising analyzing metadata associated with the different collaborative meetings; and
wherein the recommendation is based at least in part on results of an analysis of the metadata.

10. A tangible machine-readable storage medium encoded with instructions executable by a processor, the machine-readable storage medium comprising:
instructions to intercept, at a computing device (314, 314-n), content shared via another computing device (314, 314-n) during a collaborative meeting, wherein the shared content is streamed content shared during the collaborative meeting;
instructions to analyze shared content to determine a topic of the shared content using a neural network and based on a corpus of data;
instructions to determine discrepancies between the shared content of the collaborative meeting and shared content of other collaborative meetings;
instructions to determine similarities between the shared content of the collaborative meeting and shared content of other collaborative meetings;
instructions to determine that the collaborative meeting relates to a same topic as at least one of the other collaborative meetings based on a threshold degree of similarity between respective shared content; and
instructions to provide participants in at least one of the collaborative meeting and the at least one other collaborative meeting with a recommendation and providing a notification to at least one user participating in at least one of the different collaborative meetings of the discrepancies when the meetings relate to a same topic.

11. The machine-readable storage medium of claim 10, wherein shared content is intercepted from multiple computing devices (314, 314-n).

12. The machine-readable storage medium of claim 10, wherein the shared content comprises at least one of:
a video presentation;
an audio presentation;
a textual presentation;
a multimedia presentation;
audio capture from the collaborative meeting; and
video capture from the collaborative meeting.

## Patentansprüche

1. Inhaltsverfolgungssystem (100), umfassend:
eine Netzwerkschnittstelle (102) zum Koppeln des Inhaltsverfolgungssystems (100) mit mehreren Rechenvorrichtungen (314, 314-n);
einen Inhaltsabfänger (104) zum Abfangen von Inhalt, der während einer kollaborativen Besprechung geteilt wird, wobei der geteilte Inhalt gestreamter Inhalt ist, der während der kollaborativen Besprechung geteilt wird;
einen Inhaltsanalysator (106) zum:
Analysieren von gemeinsam genutzten Inhalt, um ein Thema des gemeinsam genutzten Inhalts zu bestimmen,
wobei der Inhaltsanalysator (106) ein neuronales Netzwerk umfasst, um basierend auf einem Datenkorpus das Thema des geteilten Inhalts zu bestimmen;
einen Inhaltsvergleicher (108) zum:
Identifizieren von Ähnlichkeiten zwischen gemeinsam genutzten Inhalten verschiedener kollaborativer Besprechungen;
Bestimmen von Abweichungen zwischen dem geteilten Inhalt der kollaborativen Besprechung und dem geteilten Inhalt anderer kollaborativer Besprechungen; und
Bestimmen, dass sich die kollaborative Besprechung auf ein gleiches Thema bezieht wie mindestens eine der anderen kollaborativen Besprechungen, basierend auf einem Schwellengrad an Ähnlichkeit zwischen jeweiligen geteilten Inhalten; und
eine Schnittstelle (110), zum Bereitstellen, wenn sich die Besprechungen auf ein gleiches Thema beziehen:
einer Empfehlung an mindestens einen Benutzer, der an mindestens einer der verschiedenen kollaborativen Besprechungen (108) teilnimmt, und
einer Benachrichtigung, die die Abweichungen zwischen kollaborativen Besprechungen angibt.

2. System nach Anspruch 1, wobei der Inhaltsabfänger (104) Inhalte unterschiedlicher Formate abfängt.

3. System nach Anspruch 1, wobei der Inhaltsvergleicher (108) Inhalt über Formattypen hinweg vergleicht.

4. System nach Anspruch 1, wobei:
das Inhaltsverfolgungssystem (100) auf einer Rechenvorrichtung (314, 314-n) eines an der kollaborativen Besprechung teilnehmenden Benutzers angeordnet ist; und
der Inhaltsabfänger (104) auf der Rechenvorrichtung (314, 314-n) des Benutzers geteilten Inhalt abfängt.

5. System nach Anspruch 1, wobei:
das Inhaltsverfolgungssystem (100) auf einer Konferenzrechenvorrichtung (416) angeordnet ist, die während der kollaborativen Besprechung verwendet wird; und
der Inhaltsabfänger (104) Inhalt abfängt, der auf einer beliebigen der mehreren Rechenvorrichtungen (314, 314-n), die an die Konferenzrechenvorrichtung (416) gekoppelt sind, während der kollaborativen Besprechung geteilt wird.

6. System nach Anspruch 1, wobei:
das Inhaltsverfolgungssystem (100) auf einem Server (518) angeordnet und an mehrere Konferenzrechenvorrichtungen (416) gekoppelt ist; und
der Inhaltsabfänger (104) Inhalt abfängt, der über eine beliebige der mehreren Konferenzrechenvorrichtungen (416) während der verschiedenen kollaborativen Besprechungen geteilt wird.

7. Verfahren, umfassend:
Abfangen von Inhalt, der während einer kollaborativen Besprechung geteilt wird, wobei der geteilte Inhalt gestreamter Inhalt ist, der während der kollaborativen Besprechung geteilt wird;
Analysieren von gemeinsam genutztem Inhalt zum Bestimmen eines Themas des gemeinsam genutzten Inhalts unter Verwendung eines neuronalen Netzes und basierend auf einem Datenkorpus;
Identifizieren von Ähnlichkeiten zwischen gemeinsam genutzten Inhalten verschiedener kollaborativer Besprechungen;
Identifizieren von Abweichungen zwischen dem geteilten Inhalt der kollaborativen Besprechung und dem geteilten Inhalt anderer kollaborativer Besprechungen;
Bestimmen, dass sich die kollaborative Besprechung auf ein gleiches Thema bezieht wie mindestens eine der anderen kollaborativen Besprechungen, basierend auf einem Schwellengrad an Ähnlichkeit zwischen jeweiligen geteilten Inhalten; und
wenn sich die Besprechungen auf ein gleiches Thema beziehen:
Bereitstellen einer Empfehlung an mindestens einen Benutzer, der an mindestens einer der verschiedenen kollaborativen Besprechungen teilnimmt, basierend auf identifizierten Ähnlichkeiten zwischen dem gemeinsamen Inhalt der mindestens einen anderen kollaborativen Besprechung und dem gemeinsamen Inhalt der kollaborativen Besprechung, und
Bereitstellen einer Benachrichtigung über die Diskrepanzen an mindestens einen Benutzer, der an mindestens einer der verschiedenen kollaborativen Besprechungen teilnimmt.

8. Verfahren nach Anspruch 7, wobei die Empfehlung während mindestens einer der verschiedenen kollaborativen Besprechungen bereitgestellt wird.

9. Verfahren nach Anspruch 7,
ferner umfassend das Analysieren von Metadaten, die den verschiedenen kollaborativen Besprechungen zugeordnet sind; und
wobei die Empfehlung mindestens teilweise auf Ergebnissen einer Analyse der Metadaten basiert.

10. Greifbares maschinenlesbares Speichermedium, das mit Anweisungen, die durch einen Prozessor ausführbar sind, codiert ist, das maschinenlesbare Speichermedium umfassend:
Anweisungen, um an einer Rechenvorrichtung (314, 314-n) Inhalt abzufangen, der über eine andere Rechenvorrichtung (314, 314-n) während einer kollaborativen Besprechung geteilt wird, wobei der geteilte Inhalt gestreamter Inhalt ist, der während der kollaborativen Besprechung geteilt wird;
Anweisungen zum Analysieren von gemeinsam genutztem Inhalt, um ein Thema des gemeinsam genutzten Inhalts unter Verwendung eines neuronalen Netzes und basierend auf einem Datenkorpus zu bestimmen;
Anweisungen zum Bestimmen von Diskrepanzen zwischen dem gemeinsam genutzten Inhalt der kollaborativen Besprechung und gemeinsam genutztem Inhalt anderer kollaborativer Besprechungen;
Anweisungen zum Bestimmen von Ähnlichkeiten zwischen dem gemeinsam genutzten Inhalt der kollaborativen Besprechung und gemeinsam genutztem Inhalt anderer kollaborativer Besprechungen;
Anweisung zum Bestimmen, dass sich die kollaborative Besprechung auf ein gleiches Thema bezieht wie mindestens eine der anderen kollaborativen Besprechungen, basierend auf einem Schwellengrad an Ähnlichkeit zwischen jeweiligen geteilten Inhalten; und
Anweisungen, um Teilnehmern an mindestens einer von der kollaborativen Besprechung und der mindestens einen anderen kollaborativen Besprechung eine Empfehlung bereitzustellen, und Bereitstellen einer Benachrichtigung an mindestens einen Benutzer, der an mindestens einer der verschiedenen kollaborativen Besprechungen teilnimmt, über die Diskrepanzen, wenn sich die Besprechungen auf ein gleiches Thema beziehen.

11. Maschinenlesbares Speichermedium nach Anspruch 10, wobei gemeinsam genutzter Inhalt von mehreren Rechenvorrichtungen (314, 314-n) abgefangen wird.

12. Maschinenlesbares Speichermedium nach Anspruch 10, wobei der gemeinsam genutzte Inhalt mindestens eines von Folgendem umfasst:
Eine Videopräsentation;
eine Audiopräsentation;
eine Textdarstellung;
eine Multimedia-Präsentation;
Audioerfassung aus der kollaborativen Besprechung; und
Videoerfassung aus der kollaborativen Besprechung.

## Revendications

1. Système de suivi de contenu (100), comprenant :
une interface réseau (102) pour coupler le système de suivi de contenu (100) à de multiples dispositifs informatiques (314, 314-n) ;
un intercepteur de contenu (104) pour intercepter du contenu partagé pendant une réunion collaborative, dans lequel le contenu partagé est du contenu diffusé en continu partagé pendant la réunion collaborative ;
un analyseur de contenu (106) pour :
analyser du contenu partagé pour déterminer un sujet du contenu partagé,
dans lequel l'analyseur de contenu (106) comprend un réseau de neurones pour déterminer, sur la base d'un corpus de données, le sujet du contenu partagé ;
un comparateur de contenu (108) pour :
identifier des similitudes entre du contenu partagé de différentes réunions collaboratives ;
déterminer des divergences entre le contenu partagé de la réunion collaborative et le contenu partagé d'autres réunions collaboratives ; et
déterminer que la réunion collaborative se rapporte à un même sujet qu'au moins l'une des autres réunions collaboratives sur la base d'un degré de similitude seuil entre des contenus partagés respectifs ; et
une interface (110) pour fournir, lorsque les réunions se rapportent à un même sujet :
une recommandation à au moins un utilisateur participant à au moins l'une des différentes réunions collaboratives (108), et
une notification indiquant les divergences entre des réunions collaboratives.

2. Système selon la revendication 1, dans lequel l'intercepteur de contenu (104) intercepte du contenu de différents formats.

3. Système selon la revendication 1, dans lequel le comparateur de contenu (108) compare le contenu entre des types de format.

4. Système selon la revendication 1, dans lequel :
le système de suivi de contenu (100) est disposé sur un dispositif informatique (314, 314-n) d'un utilisateur participant à la réunion collaborative ; et
l'intercepteur de contenu (104) intercepte du contenu partagé sur le dispositif informatique (314, 314-n) de l'utilisateur.

5. Système selon la revendication 1, dans lequel :
le système de suivi de contenu (100) est disposé sur un dispositif informatique de conférence (416) utilisé pendant la réunion collaborative ; et
l'intercepteur de contenu (104) intercepte du contenu partagé sur l'un quelconque des multiples dispositifs informatiques (314, 314-n) couplés au dispositif informatique de conférence (416) pendant la réunion collaborative.

6. Système selon la revendication 1, dans lequel :
le système de suivi de contenu (100) est disposé sur un serveur (518) et est couplé à plusieurs dispositifs informatiques de conférence (416) ; et
l'intercepteur de contenu (104) intercepte du contenu partagé par l'intermédiaire de l'un quelconque des multiples dispositifs informatiques de conférence (416) lors des différentes réunions collaboratives.

7. Procédé, comprenant :
l'interception de contenu partagé au cours d'une réunion collaborative, dans lequel le contenu partagé est un contenu diffusé en continu partagé au cours de la réunion collaborative ;
l'analyse d'un contenu partagé pour déterminer un sujet du contenu partagé en utilisant un réseau de neurones et sur la base d'un corpus de données ;
l'identification de similitudes entre des contenus partagés de différentes réunions collaboratives ;
l'identification de divergences entre le contenu partagé de la réunion collaborative et le contenu partagé d'autres réunions collaboratives ;
la détermination que la réunion collaborative se rapporte à un même sujet qu'au moins l'une des autres réunions collaboratives sur la base d'un degré de similitude seuil entre des contenus partagés respectifs ; et
lorsque les réunions portent sur un même sujet :
la fourniture d'une recommandation à au moins un utilisateur participant à au moins l'une des différentes réunions collaboratives sur la base de similitudes identifiées entre le contenu partagé de l'au moins une réunion collaborative différente et le contenu partagé de la réunion collaborative, et
la fourniture d'une notification des divergences à au moins un utilisateur participant à au moins l'une des différentes réunions collaboratives.

8. Procédé selon la revendication 7, dans lequel la recommandation est fournie lors d'au moins l'une des différentes réunions collaboratives.

9. Procédé selon la revendication 7
comprenant en outre l'analyse de métadonnées associées aux différentes réunions collaboratives ; et
dans lequel la recommandation est basée au moins en partie sur des résultats d'une analyse des métadonnées.

10. Support de stockage tangible lisible par machine codé avec des instructions exécutables par un processeur, le support de stockage lisible par machine comprenant :
des instructions pour intercepter, au niveau d'un dispositif informatique (314, 314-n), un contenu partagé par le biais d'un autre dispositif informatique (314, 314-n) pendant une réunion collaborative, dans lequel le contenu partagé est un contenu diffusé en continu partagé pendant la réunion collaborative ;
des instructions pour analyser un contenu partagé afin de déterminer un sujet du contenu partagé à l'aide d'un réseau de neurones et sur la base d'un corpus de données ;
des instructions pour déterminer des divergences entre le contenu partagé de la réunion collaborative et le contenu partagé d'autres réunions collaboratives ;
des instructions pour déterminer des similitudes entre le contenu partagé de la réunion collaborative et le contenu partagé d'autres réunions collaboratives ;
des instructions pour déterminer que la réunion collaborative se rapporte à un même sujet qu'au moins l'une des autres réunions collaboratives sur la base d'un degré de similitude seuil entre des contenus partagés respectifs ; et
des instructions pour fournir une recommandation à des participants à au moins l'une de la réunion collaborative et de l'au moins une autre réunion collaborative, et la fourniture d'une notification des divergences à au moins un utilisateur participant à au moins l'une des différentes réunions collaboratives lorsque les réunions portent sur un même sujet.

11. Support de stockage lisible par machine selon la revendication 10, dans lequel le contenu partagé est intercepté à partir de plusieurs dispositifs informatiques (314, 314-n).

12. Support de stockage lisible par machine selon la revendication 10, dans lequel le contenu partagé comprend au moins l'une parmi :
une présentation vidéo ;
une présentation audio ;
une présentation textuelle ;
une présentation multimédia ;
une capture audio de la réunion collaborative ; et
une capture vidéo de la réunion collaborative.
